# EUROPEAN PATENT APPLICATION

(11) **EP 4 832 338 A1**
(43) Date of publication of application: **28.10.2026**
(21) Application number: 24906870.1
(22) Date of filing: 07.10.2024
(51) Int. Cl.: H02P 27/08

(54) **MOTOR ROTATION CONTROL DEVICE, MOTOR ROTATION CONTROL METHOD, AND DISTANCE MEASUREMENT DEVICE**

(30) Priority: 18.12.2023 JP 2023213178
(71) Applicant: PANASONIC INTELLECTUAL PROPERTY MANAGEMENT CO., LTD., Kadoma-shi, Osaka 571-0057 (JP)
(72) Inventor: KASHIWABARA, Yoshiro, Osaka 571-0057 (JP); SUENAGA, Kiyoyuki, Osaka 571-0057 (JP)
(74) Representative: SSM Sandmair
(86) International application number: PCT/JP2024/035751
(87) International publication number: WO 2025/134481

(57) **Abstract**

This motor rotation control device includes: a rotation monitoring circuit that outputs a measured rotation speed that is a measurement result of a rotation speed of a motor; a disturbance injection circuit that outputs a disturbance signal which indicates a predetermined upper limit value and a lower limit value repeatedly at fixed intervals; a rotation control circuit that outputs a signal obtained by combining the disturbance signal with an operation amount based on the deviation between the measured rotation speed output from the rotation monitoring circuit and a target rotation speed which is a rotation speed set as a target for the motor; and a motor driver circuit that applies, to the motor, a current or a voltage based on the signal output from the rotation control circuit.

## Description

### TECHNICAL FIELD

The present disclosure relates to a motor rotation control device, a motor rotation control method, and a distance measurement device.

### BACKGROUND ART

A rotation control device that controls rotation of a motor using an encoder is known (Patent Literature 1).

### CITATION LIST

### PATENT LITERATURE

Patent Literature 1: JPH01-132967A

### SUMMARY OF INVENTION

### TECHNICAL PROBLEM

Although a rotation speed of a motor can be changed by controlling a current or a voltage applied to the motor, it is difficult to cause the motor to stably rotate at a target rotation speed.

An object of the present disclosure is to provide a technique for causing a motor to stably rotate at a target rotation speed.

### SOLUTION TO PROBLEM

A motor rotation control device according to an aspect of the present disclosure including: a rotation monitoring circuit configured to output a measurement rotation speed that is a measurement result of a rotation speed of a motor; a disturbance injection circuit configured to output a disturbance signal that repeats a predetermined upper limit value and a predetermined lower limit value at a constant period; a rotation control circuit configured to output a signal obtained by synthesizing the disturbance signal with an operation amount based on a deviation between the measurement rotation speed output from the rotation monitoring circuit and a target rotation speed that is a rotation speed targeted by the motor; and a motor driver circuit configured to apply, to the motor, a current or a voltage based on the signal output from the rotation control circuit.

A motor rotation control method according to an aspect of the present disclosure including: monitoring a measurement rotation speed which is a measurement result of a rotation speed of a motor; outputting a disturbance signal that repeats a predetermined upper limit value and a predetermined lower limit value at a constant period; calculating an operation amount based on a deviation between the measured measurement rotation speed and a target rotation speed that is a rotation speed targeted by the motor, and outputting a signal obtained by synthesizing the disturbance signal with the operation amount; and applying, to the motor, a current or a voltage based on a signal output from the rotation control circuit.

A distance measurement device according to an aspect of the present disclosure for measuring a distance to an object, including the motor rotation control device described above.

### ADVANTAGEOUS EFFECTS OF INVENTION

According to the present disclosure, it is possible to cause a motor to stably rotate at a target rotation speed.

### BRIEF DESCRIPTION OF DRAWINGS

FIG. 1 is a block diagram illustrating a configuration example of a motor rotation control device according to a first embodiment.
FIG. 2 is a graph illustrating an example of a correspondence relation between an input duty ratio and an output current or an output voltage.
FIG. 3 is a graph illustrating an example of loop characteristics of rotation control on a motor.
FIGS. 4A and 4B are diagrams illustrating an input PWM signal and an input carrier signal as well as an output PWM signal and an output carrier signal in a motor driver circuit in the related art.
FIG. 5 is a diagram illustrating a relation between an input duty ratio and an output duty ratio in the motor driver circuit in the related art.
FIG. 6 is a graph illustrating an example of temporal changes in the output duty ratio and a rotation speed of a motor in the related art.
FIG. 7 is a diagram illustrating a relation between an output duty ratio and an average output duty ratio in a motor driver circuit according to the present embodiment.
FIG. 8 is a diagram illustrating an example of a frequency band of a disturbance signal according to the present embodiment.
FIG. 9 is a graph illustrating an example of temporal changes in the output duty ratio and a rotation speed of the motor according to the present embodiment.
FIG. 10 is an external perspective view of a distance measurement device according to the first embodiment.
FIG. 11 is a longitudinal cross-sectional view of the distance measurement device according to the first embodiment.

### DESCRIPTION OF EMBODIMENTS

Hereinafter, an embodiment of the present disclosure will be described in detail with reference to the drawings as appropriate. However, unnecessarily detailed description may be omitted. For example, detailed description of already well-known matters and redundant description of substantially the same configuration may be omitted. This is to avoid unnecessary redundancy of the following description and to facilitate understanding of those skilled in the art. The accompanying drawings and the following description are provided for those skilled in the art to sufficiently understand the present disclosure, and are not intended to limit the subject matter described in claims.

### (First Embodiment)

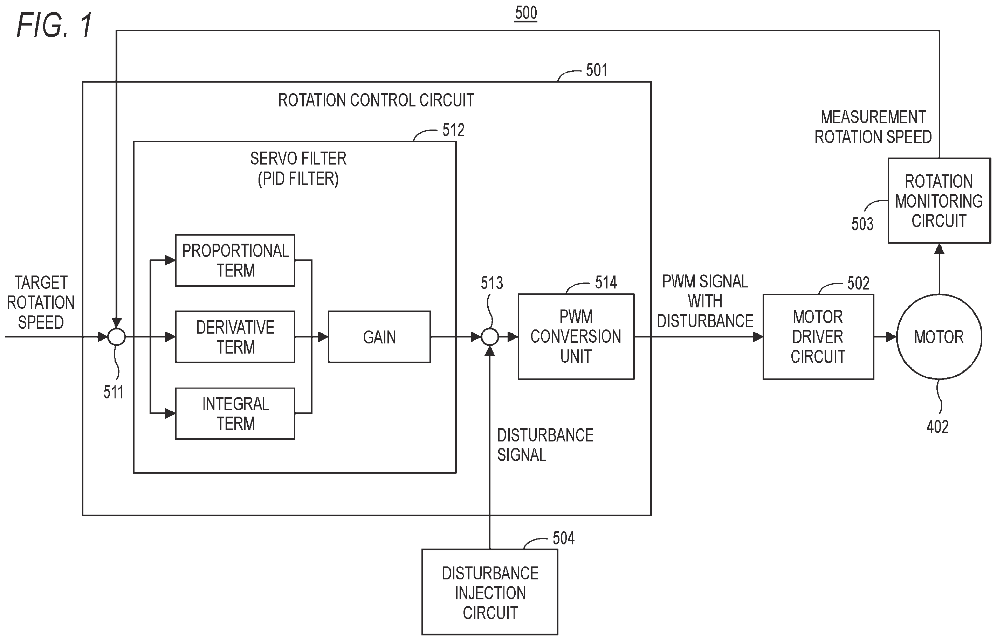

FIG. 1 is a block diagram illustrating a configuration example of a motor rotation control device 500 according to a first embodiment.

The motor rotation control device 500 is a device for controlling a rotation speed of a motor 402. The motor rotation control device 500 includes a rotation control circuit 501, a motor driver circuit 502, a rotation monitoring circuit 503, and a disturbance injection circuit 504. These circuits may be separate integrated circuits or may be a single integrated circuit. The functions of these circuits may be implemented by a predetermined processor (not illustrated) executing a predetermined computer program in cooperation with a memory (not illustrated).

The rotation monitoring circuit 503 measures the rotation speed of the motor 402 and outputs the measured rotation speed (hereinafter referred to as measurement rotation speed). In the present embodiment, the rotation speed of the motor 402 is the number of rotations per minute (rpm). The rotation monitoring circuit 503 may measure the rotation speed by counting, with a photocoupler, an encoder attached to the motor 402. Alternatively, the rotation monitoring circuit 503 may measure the rotation speed by counting a change in magnetism using a Hall element (Hall IC) or the like attached to the motor 402. Alternatively, the rotation monitoring circuit 503 may measure the rotation speed by measuring a counter electromotive voltage generated in the motor 402.

The rotation control circuit 501 performs control for causing the motor 402 to stably rotate at a target rotation speed (hereinafter referred to as target rotation speed). The target rotation speed may be determined in advance or may be input by a user. The rotation control circuit 501 includes a deviation calculation unit 511, a servo filter 512, a disturbance synthesis unit 513, and a PWM conversion unit 514. PWM is an abbreviation for Pulse Width Modulation. The servo filter 512 may be read as a PID filter.

The deviation calculation unit 511 calculates and outputs a deviation between the target rotation speed and the measurement rotation speed output from the rotation monitoring circuit 503. That is, the deviation calculation unit 511 calculates "deviation = (target rotation speed - measurement rotation speed)".

The servo filter 512 uses at least one of a proportional term, a derivative term, and an integral term and a predetermined gain to calculate and output an operation amount corresponding to the deviation calculated by the deviation calculation unit 511.

The disturbance synthesis unit 513 synthesizes a disturbance signal output by the disturbance injection circuit 504 with the operation amount output from the servo filter 512, and outputs an operation amount synthesized with the disturbance signal (hereinafter, referred to as operation amount with disturbance). The disturbance injection circuit 504 generates and outputs a disturbance signal. Details of the disturbance synthesis unit 513 and the disturbance injection circuit 504 will be described later.

The PWM conversion unit 514 receives the operation amount with disturbance and outputs a PWM signal corresponding to the operation amount with disturbance (hereinafter referred to as PWM signal with disturbance).

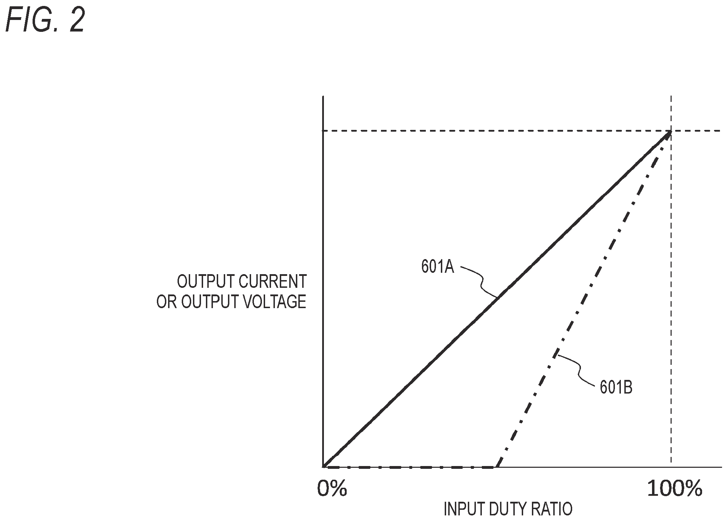

The motor driver circuit 502 is a circuit for controlling rotational driving of the motor 402. FIG. 2 is a graph illustrating an example of a correspondence relation between an input duty ratio and an output current (IM) or an output voltage (VM). In the graph illustrated in FIG. 2, a horizontal axis represents the input duty ratio, and a vertical axis represents the output current or the output voltage. For example, the motor driver circuit 502 applies, to the motor, an output current or an output voltage corresponding to a duty ratio of an input PWM signal (input duty ratio), as illustrated in FIG. 2. The motor driver circuit 502 has a characteristic of applying the output current or the output voltage at 0% to 100% corresponding to the input duty ratio of 0% to 100%, as illustrated in a graph of a solid line 601A in FIG. 2. Alternatively, the motor driver circuit 502 has a characteristic of applying the output current or the output voltage at 0% to 100% corresponding to the input duty ratio of 50% to 100%, as illustrated in a graph of a dashed-dotted line 601B in FIG. 2. Alternatively, although not illustrated, the motor driver circuit 502 may have a characteristic of applying the output current or the output voltage at -100% to 100% corresponding to the input duty ratio of 0% to 100%.

The motor 402 is rotationally driven at a rotation speed corresponding to the output current or the output voltage applied from the motor driver circuit 502. Examples of the motor 402 include a DC motor and a three-phase brushless motor.

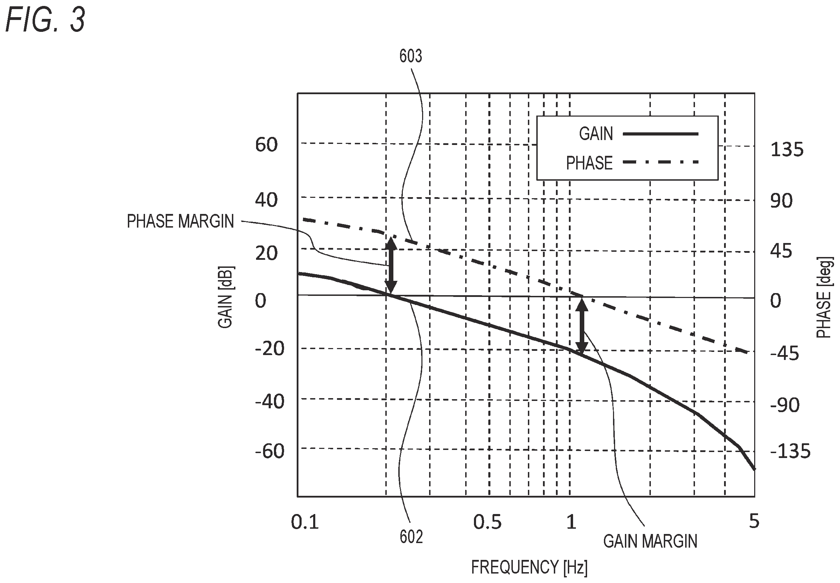

FIG. 3 is a graph illustrating an example of loop characteristics of rotation control on the motor 402. In FIG. 3, a horizontal axis represents a frequency, a left vertical axis represents a gain [dB], and a right vertical axis represents a phase [deg]. In FIG. 3, a graph of a solid line 602 represents the gain, and corresponds to the left vertical axis of the graph. A graph of a dashed-dotted line 603 represents the phase and corresponds to the right vertical axis of the graph.

The rotation control on the motor 402 may be designed to have a gain intersection of about several Hz. For example, the rotation control on the motor 402 may be designed such that a phase margin of the gain intersection is 60 degrees or more and a gain margin of a phase intersection is about 20 dB, as illustrated in FIG. 3. In this way, by sufficiently securing the phase margin and the gain margin, stable rotation control can be implemented.

### <Configuration in Related Art>

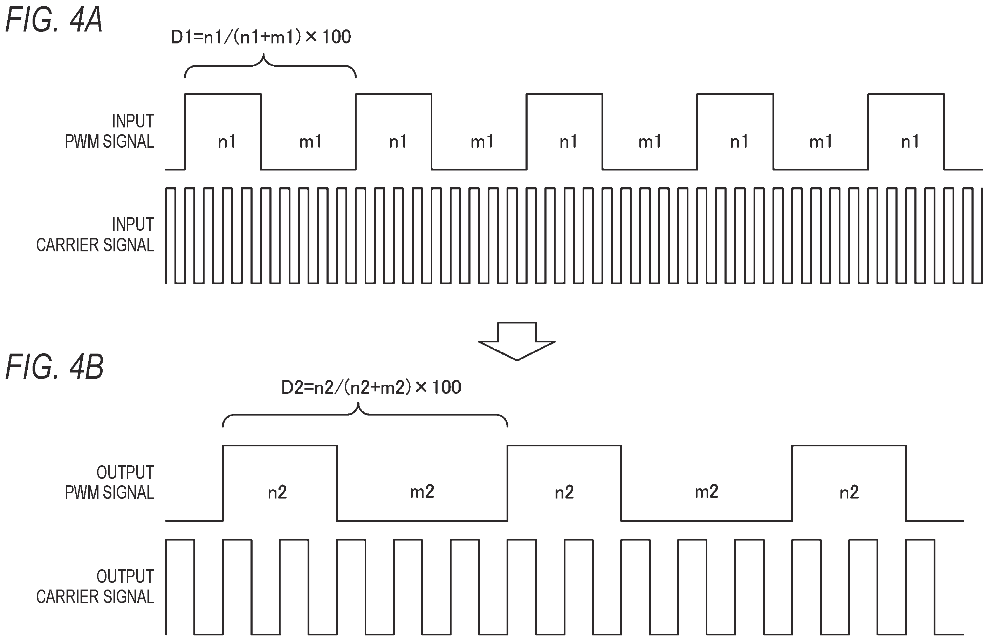

Next, problems in a motor rotation control device in the related art that does not include the disturbance synthesis unit 513 and the disturbance injection circuit 504 will be described with reference to FIGS. 4A to 6.

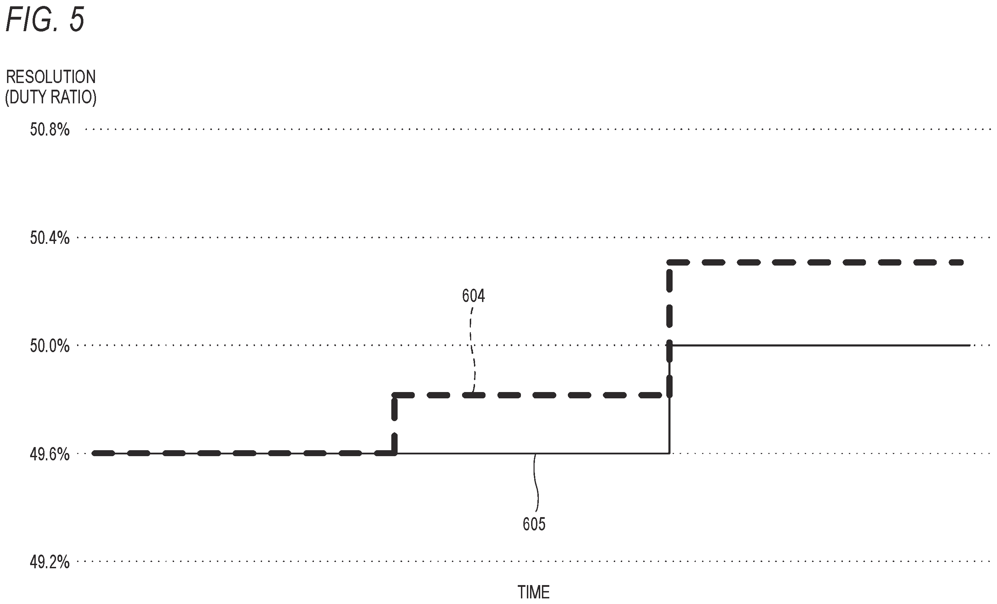

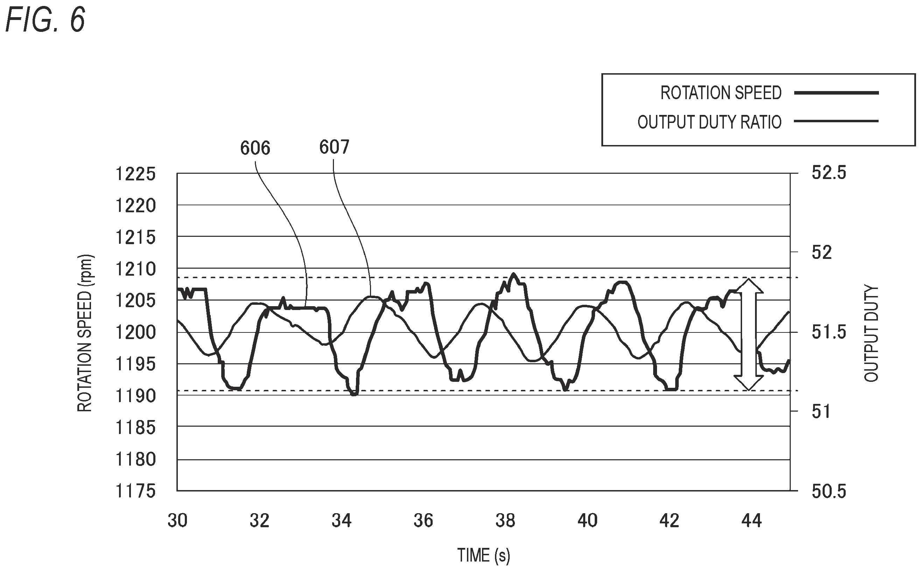

FIGS. 4A and 4B are diagrams illustrating an input PWM signal and an input carrier signal as well as an output PWM signal and an output carrier signal in the motor driver circuit 502 in the related art. FIG. 5 is a diagram illustrating a relation between an input duty ratio and an output duty ratio in the motor driver circuit 502 in the related art. In the graph illustrated in FIG. 5, a horizontal axis represents a time, and a vertical axis represents a resolution (duty ratio). FIG. 6 is a graph illustrating an example of temporal changes in the output duty ratio and the rotation speed of the motor 402 in the related art. In the graph illustrated in FIG. 6, a horizontal axis represents the time, a left vertical axis represents the rotation speed (rpm), and a right vertical axis represents the output duty ratio. In addition, in the graph illustrated in FIG. 6, a thick line 606 represents a graph of the rotation speed, and a thin line 607 represents a graph of the output duty ratio.

A duty ratio D of the PWM signal is calculated as follows. $D = n / \left(n+m\right) \times 100 \left(%\right)$

Here, n represents a time when the voltage is high, m represents a time when the voltage is low, and (n + m) represents a period of the PWM signal.

As illustrated in FIG. 4A, resolutions of n1 and m1 of the PWM signal input to the motor driver circuit 502 (input PWM signal) is based on a frequency (input carrier frequency) f1 of the input carrier signal of the motor driver circuit 502. That is, the input PWM signal is chopped at the input carrier frequency f1. In this case, n1 is the number of pulses of the input carrier signal included in the time when the voltage is high, and m1 is the number of pulses of the input carrier signal included in the time when the voltage is low. The carrier frequency is a base frequency for determining the duty ratio of the PWM signal, and the carrier signal is a signal having the carrier frequency.

As illustrated in FIG. 4B, resolutions of n2 and m2 of the PWM signal corresponding to the output current (or output voltage) output from the motor driver circuit 502 (hereinafter referred to as output PWM signal) is based on a frequency (output carrier frequency) f2 of the output carrier signal of the motor driver circuit 502. That is, the output PWM signal is chopped at the output carrier frequency f2. In this case, n2 is the number of pulses of the output carrier signal included in the time when the voltage is high, and m2 is the number of pulses of the output carrier signal included in the time when the voltage is low.

The output carrier frequency f2 is smaller than the input carrier frequency f1. For example, the output carrier frequency f2 is several hundred Hz, and the input carrier frequency f1 is several hundred kHz. That is, a resolution on an output side of the motor driver circuit 502 is lower than a resolution on an input side of the motor driver circuit 502.

Since the resolution on the input side is different from the resolution on the output side in this way, the motor driver circuit 502 cannot always generate an output duty ratio D2 (= n2/(n2 + m2) × 100) at exactly the same ratio as an input duty ratio D1 (= n1/(n1 + m1) × 100). That is, the output duty ratio D2 is limited to the resolution on the output side even when the input duty ratio D1 is finely set.

For example, even when the input duty ratio D1 is set to 49.8% as represented by a broken line 604 in FIG. 5, the output duty ratio D2 is 49.6% as represented by a solid line 605 in FIG. 5. Therefore, for example, the target rotation speed of the motor 402 is set to 1,200 rpm and even when the input duty ratio D1 optimum for 1,200 rpm is set, the motor driver circuit 502 may not be able to generate the output duty ratio D2 optimum for 1,200 rpm due to limitation on the resolution on the output side. In this case, the output duty ratio D2 repeatedly increases and decreases (fluctuates) as illustrated in a graph of a thin line 607 in FIG. 6, for example, and as a result, a phenomenon may occur in which the rotation speed of the motor 402 also repeatedly increases and decreases (fluctuates) between around 1,190 rpm and 1,205 rpm, as illustrated in a graph of a thick line 606 in FIG. 6. That is, although the rotation control on the motor 402 is stable as illustrated in FIG. 3, a phenomenon may occur in which the rotation speed of the motor 402 is unstable as illustrated in FIG. 6.

In the present embodiment, in order to solve such a problem, the disturbance injection circuit 504 and the disturbance synthesis unit 513 are provided in the motor rotation control device 500. Hereinafter, the present embodiment will be described in detail.

### <Configuration of Present Embodiment>

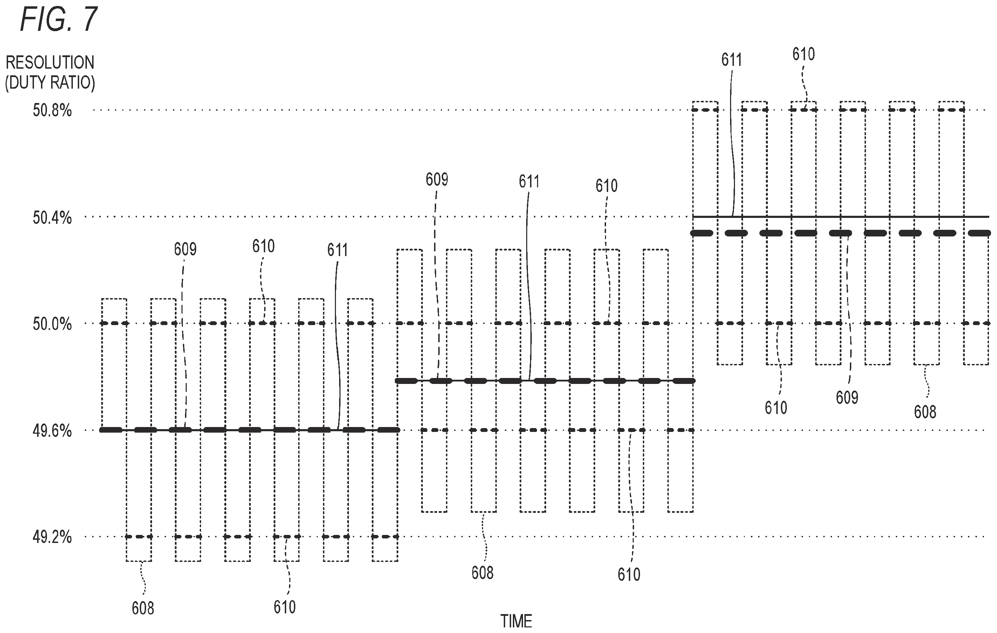

Next, effects of the motor rotation control device 500 according to the present embodiment including the disturbance synthesis unit 513 and the disturbance injection circuit 504 will be described with reference to FIGS. 7 to 9.

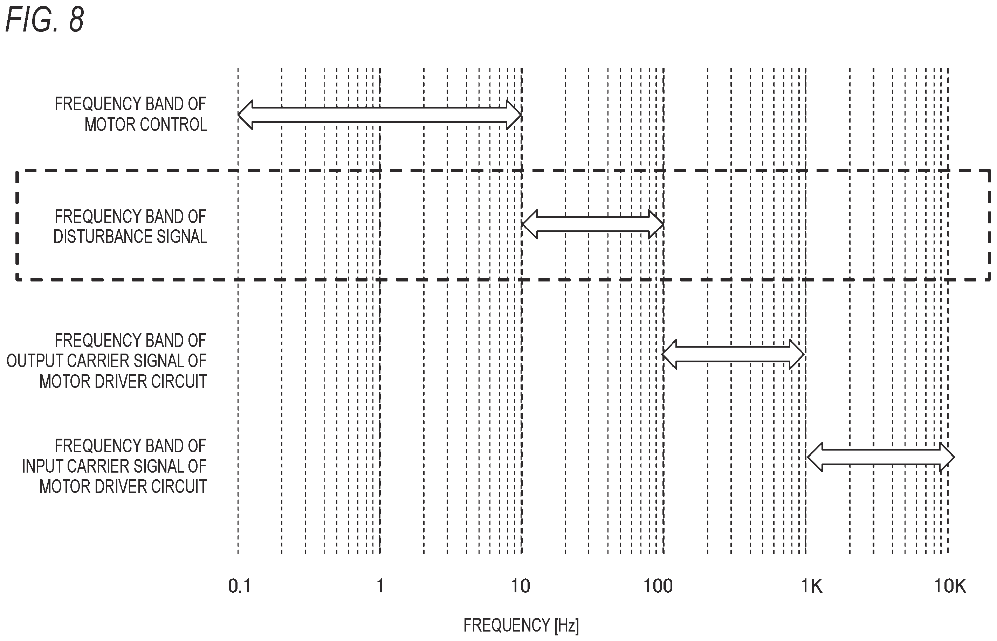

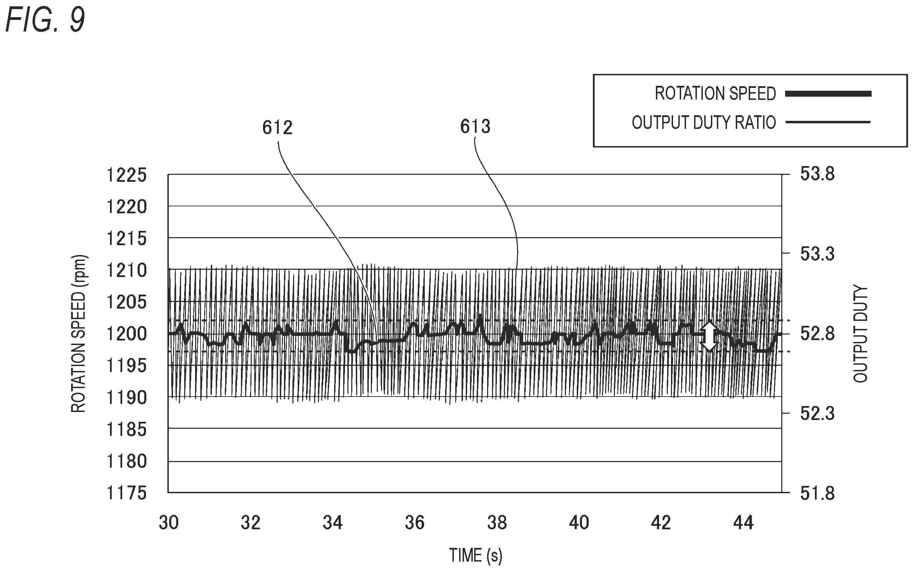

FIG. 7 is a diagram illustrating a relation between an output duty ratio and an average output duty ratio in the motor driver circuit 502 according to the present embodiment. In the graph illustrated in FIG. 7, a horizontal axis represents a time, and a vertical axis represents a resolution (duty ratio). In addition, in the graph illustrated in FIG. 7, a pulsed dotted line 608 represents the disturbance signal, a thick broken line 609 represents the input duty ratio, a thick dotted line 610 that increases or decreases represents the output duty ratio when the disturbance signal is synthesized, and a solid line 611 represents the average output duty ratio. FIG. 8 is a diagram illustrating an example of a frequency band of the disturbance signal according to the present embodiment. In FIG. 8, a horizontal axis represents the frequency [Hz]. FIG. 9 is a graph illustrating an example of temporal changes in the output duty ratio and the rotation speed of the motor 402 according to the present embodiment. In the graph illustrated in FIG. 6, a horizontal axis represents the time, a left vertical axis represents the rotation speed (rpm), and a right vertical axis represents the output duty ratio. In addition, in the graph illustrated in FIG. 9, a thick line 612 represents a graph of the rotation speed, and a thin line 613 represents a graph of the output duty ratio.

As illustrated in FIG. 7, the disturbance injection circuit 504 outputs a disturbance signal that repeats a predetermined upper limit value and a predetermined lower limit value at a constant period. A magnitude between the upper limit value and the lower limit value (that is, difference between upper limit value and lower limit value) may be determined based on the resolution of the output duty ratio of the motor driver circuit 502. For example, the magnitude between the upper limit value and the lower limit value of the disturbance signal is larger than a magnitude of the resolution of the output duty ratio.

As illustrated in FIG. 8, the frequency band of the disturbance signal may be larger than a frequency band (gain intersection) related to the control on the motor 402 and smaller than a frequency band of the output carrier signal (output control band) of the motor driver circuit 502. For example, it is assumed that the frequency band related to the control on the motor 402 is 0.1 Hz to 10 Hz, the frequency band of the output carrier signal of the motor driver circuit 502 is 100 Hz to 1 kHz, and the frequency band of the input carrier signal of the motor driver circuit 502 is 1 kHz to 10 kHz, as illustrated in FIG. 8. In this case, the frequency band of the disturbance signal may be 10 Hz to 100 Hz. That is, the period of the disturbance signal may be 0.01 seconds to 0.1 seconds. In other words, the period of the disturbance signal may be longer than a period of the output carrier signal of the motor driver circuit 502 and shorter than a period related to the control on the motor 402.

The disturbance synthesis unit 513 synthesizes the disturbance signal output from the disturbance injection circuit 504 with the operation amount output from the servo filter 512, and generates and outputs the operation amount with disturbance. The operation amount with disturbance is a signal that repeats an amount larger than an original operation amount and an amount smaller than the original operation amount at a constant period due to synthesis of the disturbance signal.

The PWM conversion unit 514 generates a PWM signal corresponding to the operation amount with disturbance and outputs a PWM signal with disturbance. The PWM signal with disturbance is a signal whose duty ratio fluctuates at a constant period.

The motor driver circuit 502 receives the PWM signal with disturbance as an input PWM signal, and generates and outputs an output PWM signal corresponding to the input PMW signal. Since the input PWM signal is a signal whose input duty ratio fluctuates at a constant period, the output PWM signal is also a signal whose output duty ratio fluctuates at a constant period.

Accordingly, as illustrated in FIG. 7, the motor driver circuit 502 can apply, to the motor 402, an output current (or output voltage) corresponding to the average output duty ratio (solid line 611) which is an average of the output duty ratio (thick dotted line 610) that increases and decreases. Although the output duty ratio (thick dotted line 610) that increases and decreases is limited to the resolution on the output side of the motor driver circuit 502, the average output duty ratio (solid line 611) is not limited to the resolution on the output side of the motor driver circuit 502. Therefore, the motor driver circuit 502 can adjust the output current (or output voltage) applied to the motor 402 more finely than the resolution on the output side by using the average output duty ratio (solid line 611). That is, the motor rotation control device 500 can more finely adjust the rotation speed of the motor 402.

For example, the motor driver circuit 502 sets the target rotation speed of the motor to 1,200 rpm and synthesizes the disturbance signal with the operation amount as described above. Accordingly, as illustrated in FIG. 9, the motor driver circuit 502 applies, to the motor 402, the output current (or output voltage) corresponding to the average output duty ratio based on the output PWM signal of the output duty ratio (thin line 613) that increases and decreases. As a result, the motor rotation control device 500 according to the present embodiment can apply, to the motor 402, the output current (or output voltage) corresponding to the average output duty ratio, which cannot be obtained with the resolution of the configuration in the related art, and can stabilize the rotation speed (thick line 612) near 1,200 rpm without large increase or decreasing, as illustrated in FIG. 9.

### <Distance Measurement Device>

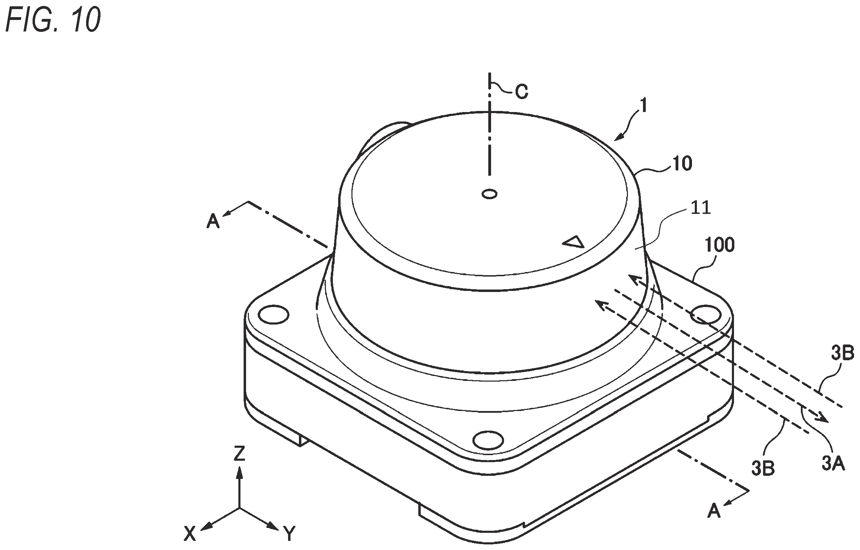

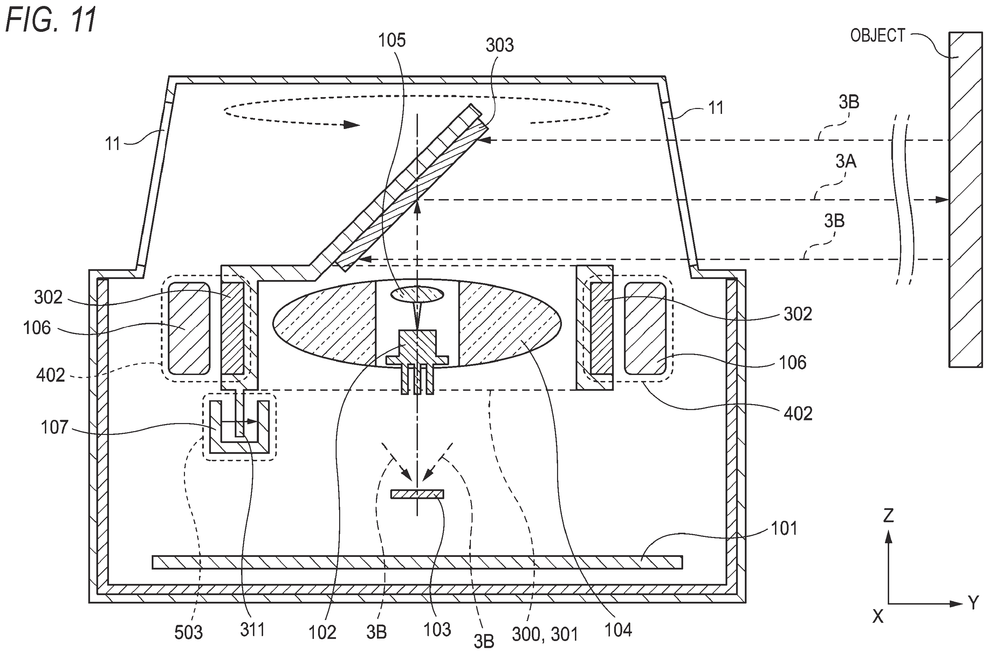

Next, a case where the above-described motor rotation control device is applied to a distance measurement device 1 will be described. FIG. 10 is an external perspective view of the distance measurement device 1 according to the first embodiment. FIG. 11 is a longitudinal cross-sectional view of the distance measurement device 1 according to the first embodiment. FIG. 11 corresponds to an A-A cross-sectional view of the distance measurement device 1 illustrated in FIG. 10.

As illustrated in FIGS. 10 and 11, the distance measurement device 1 includes a fixed part 100, a rotation part 300, and an outer cover 10.

The fixed part 100 has a substantially rectangular parallelepiped shape. The rotation part 300 is connected to an upper surface of the fixed part 100 and has a cylindrical shape that rotates about an axis perpendicular to the upper surface as a rotation axis C. The outer cover 10 has a substantially cylindrical shape and covers the rotation part 300 from above. At least a part of a side surface of the outer cover 10 has a wavelength window 11 implemented using a wavelength selection member. The wavelength selection member is a material that transmits light of a predetermined wavelength (frequency) component used for distance measurement and that blocks light of a wavelength (frequency) component in a visible region.

The wavelength selection member has a function of blocking ambient light such as natural light or electric light.

For convenience of description, as illustrated in FIG. 10, an axis perpendicular to the upper surface (or bottom surface) of the fixed part 100 is defined as a Z axis. An axis perpendicular to the Z axis is defined as an X axis. An axis perpendicular to the Z axis and the X axis is defined as a Y axis. For convenience of description, a positive direction of the Z axis may be referred to as "upper", a negative direction of the Z axis may be referred to as "lower", and a direction away from the Z axis in an X axis direction or a Y axis direction may be referred to as "lateral". Expressions related to these directions are used for convenience of description, and are not intended to limit a posture of the structure in actual use. For example, the distance measurement device 1 illustrated in FIG. 10 may be used upside down. The A-A cross-sectional view illustrated in FIG. 11 corresponds to a cross-sectional view of a YZ plane.

The bottom surface of the fixed part 100 may be fixedly provided on a predetermined plane (for example, floor surface or housing surface of predetermined device).

The rotation part 300 rotates about a center axis in a height direction (Z axis) of the cylinder as the rotation axis C. With the rotation of the rotation part 300, an optical axis of projection light (hereinafter referred to as projection light 3A) projected from a part of the side surface of the rotation part 300 in a lateral direction rotates about the rotation axis C. Along with this, the projection light 3A and an area in which distance measurement may be performed with the projection light 3A (hereinafter, referred to as distance measurement area) also rotate. As will be described later, the distance measurement device 1 measures a distance to an object present in the distance measurement area based on a time of flight (TOF) between a timing at which the projection light 3A is projected and a timing at which the projection light 3A is received as light reflected by the object in the distance measurement area (hereinafter referred to as reflection light 3B). The rotation part 300 makes one round around the rotation axis C, so that the distance measurement device 1 can measure the distance to the object present in the distance measurement area of 360 degrees around the lateral direction.

The fixed part 100 includes a board 101, a light emitting element 102, a light receiving element 103, a focus lens 104, a collimator lens 105, a coil 106, and a photointerrupter 107. The rotation part 300 includes a rotation member 301, a magnet 302, and a reflecting mirror 303.

A motor 402 that is hollow is formed by the coil 106 of the fixed part 100 and the magnet 302 of the rotation part 300, and the rotation part 300 rotates about the rotation axis C by being driven by the motor 402.

The board 101 is, for example, a printed circuit board (PCB). The motor rotation control device 500 described above may be mounted on the board 101.

The light emitting element 102 is disposed along the rotation axis C and projects the projection light 3A upward.

The collimator lens 105 corrects the projection light 3A received from the light emitting element 102 to substantially parallel light and outputs the substantially parallel light upward.

The reflecting mirror 303 is provided in the rotation member 301 to reflect, in the lateral direction (direction along XY plane), the parallel light projected upward from the light emitting element 102 and corrected by the collimator lens 105. Since the reflecting mirror 303 rotates together with the rotation member 301, the projection light is projected (scanned) at 360 degrees around the rotation axis C in a direction orthogonal to the rotation axis C (lateral direction) with the elapse of time. The projection light 3A reflected by the reflecting mirror 303 passes through the wavelength window 11 of the outer cover 10 and is projected to the distance measurement area.

The reflection light 3B obtained by the projection light 3A being reflected by the object passes through the wavelength window 11 of the outer cover 10 and is reflected downward by the reflecting mirror 303.

The focus lens 104 focuses the reflection light 3B reflected downward by the reflecting mirror 303 and outputs the reflection light 3B downward.

The light receiving element 103 receives the reflection light 3B focused by the focus lens 104.

The rotation member 301 includes a plurality of ribs 311 at constant intervals. The photointerrupter 107 is disposed to be able to detect passage of one rib 311. By detecting and counting the passage of one rib 311 using the photointerrupter 107, the rotation monitoring circuit 503 can detect a rotation position (rotation angle) of the rotation member 301 (that is, rotation part 300). Therefore, the photointerrupter 107 and the ribs 311 can constitute the rotation monitoring circuit 503 illustrated in FIG. 1.

By applying the above-described motor rotation control device 500 to the distance measurement device 1, the motor 402 can cause the rotation part 300 to stably rotate at a constant rotation speed. Accordingly, the distance measurement device 1 to which the motor rotation control device 500 is applied can measure a position of a surrounding object and a distance to an object more stably and accurately.

### (Summary of First Embodiment)

The following techniques are disclosed based on the above description of the first embodiment.

### <Technique 1>

A motor rotation control device (500) according to an aspect including: a rotation monitoring circuit (503) configured to output a measurement rotation speed that is a measurement result of a rotation speed of a motor (402); a disturbance injection circuit (504) configured to output a disturbance signal that repeats a predetermined upper limit value and a predetermined lower limit value at a constant period; a rotation control circuit (501) configured to output a signal obtained by synthesizing the disturbance signal with an operation amount based on a deviation between the measurement rotation speed output from the rotation monitoring circuit and a target rotation speed that is a rotation speed targeted by the motor; and a motor driver circuit (502) configured to apply, to the motor, a current or a voltage based on the signal output from the rotation control circuit.

Accordingly, since the motor driver circuit can apply, to the motor, a current or a voltage based on a signal synthesized with a disturbance signal, it is possible to implement a resolution finer than a resolution of a current or a voltage based on a signal not synthesized with a disturbance signal. Therefore, it is possible to cause the motor to stably rotate at a target rotation speed.

### <Technique 2>

The motor rotation control device according to technique 1, in which the signal output by the rotation control circuit is a pulse width modulation (PWM) signal, and the current or the voltage applied to the motor by the motor driver circuit is based on a duty ratio of the PWM signal.

Accordingly, the motor driver circuit can apply, to the motor, a current or a voltage based on the duty ratio of the PWM signal.

### <Technique 3>

The motor rotation control device according to technique 2, in which a resolution of a duty ratio on an output side of the motor driver circuit is lower than a resolution of a duty ratio on an input side of the motor driver circuit.

Accordingly, it is possible to cause the motor to stably rotate at a target rotation speed even when the resolution of the duty ratio on the output side is lower than the resolution of the duty ratio on the input side.

### <Technique 4>

The motor rotation control device according to technique 3, in which a magnitude between the predetermined upper limit value and the predetermined lower limit value of the disturbance signal is larger than a magnitude of the resolution of the duty ratio on the output side of the motor driver circuit.

Accordingly, it is possible to cause the motor to stably rotate at a target rotation speed even when the resolution of the duty ratio on the output side is lower than the resolution of the duty ratio on the input side.

### <Technique 5>

The motor rotation control device according to any of techniques 2 to 4, in which a constant period of the disturbance signal is shorter than a period corresponding to a control band of the motor and longer than a period of the PWM signal output by the motor driver circuit.

Accordingly, it is possible to cause a motor to stably rotate at a target rotation speed.

### <Technique 6>

A motor rotation control method according to an aspect including: monitoring a measurement rotation speed which is a measurement result of a rotation speed of a motor; outputting a disturbance signal that repeats a predetermined upper limit value and a predetermined lower limit value at a constant period; calculating an operation amount based on a deviation between the measured measurement rotation speed and a target rotation speed that is a rotation speed targeted by the motor, and outputting a signal obtained by synthesizing the disturbance signal with the operation amount; and applying, to the motor, a current or a voltage based on a signal obtained by synthesizing the output disturbance signal.

Accordingly, since it is possible to apply, to the motor, a current or a voltage based on a signal synthesized with a disturbance signal, it is possible to implement a resolution finer than a resolution of a current or a voltage based on a signal not synthesized with a disturbance signal. Therefore, it is possible to cause the motor to stably rotate at a target rotation speed.

### <Technique 7>

A distance measurement device according to an aspect for measuring a distance to an object, including the motor rotation control device according to any of techniques 1 to 4.

Accordingly, it is possible to implement a distance measurement device that causes a motor to stably rotate at a target rotation speed.

Although the embodiment has been described above with reference to the accompanying drawings, the present disclosure is not limited thereto. It is apparent to those skilled in the art that various modifications, corrections, substitutions, additions, deletions, and equivalents can be conceived within the scope described in the claims, and it is understood that such modifications, corrections, substitutions, additions, deletions, and equivalents also fall within the technical scope of the present disclosure. In addition, components in the embodiment described above may be combined freely in a range without departing from the gist of the invention.

The present application is based on a Japanese patent application filed on December 18, 2023 (Japanese Patent Application No. 2023-213178), and contents thereof are incorporated herein by reference.

### INDUSTRIAL APPLICABILITY

The technique of the present disclosure is useful for stabilizing a rotation speed of a motor.

### REFERENCE SIGNS LIST

1 DISTANCE MEASUREMENT DEVICE
3A PROJECTION LIGHT
3B REFLECTION LIGHT
10 OUTER COVER
11 WAVELENGTH WINDOW
100 FIXED PART
101 BOARD
102 LIGHT EMITTING ELEMENT
103 LIGHT RECEIVING ELEMENT
104 FOCUS LENS
105 COLLIMATOR LENS
106 COIL
107 PHOTOINTERRUPTER
300 ROTATION PART
301 ROTATION MEMBER
302 MAGNET
303 REFLECTING MIRROR
311 RIB
402 MOTOR
500 MOTOR ROTATION CONTROL DEVICE
501 ROTATION CONTROL CIRCUIT
502 MOTOR DRIVER CIRCUIT
503 ROTATION MONITORING CIRCUIT
504 DISTURBANCE INJECTION CIRCUIT
511 DEVIATION CALCULATION UNIT
512 SERVO FILTER
514 PWM CONVERSION UNIT
513 DISTURBANCE SYNTHESIS UNIT

## Claims

1. A motor rotation control device comprising:
a rotation monitoring circuit configured to output a measurement rotation speed that is a measurement result of a rotation speed of a motor;
a disturbance injection circuit configured to output a disturbance signal that repeats a predetermined upper limit value and a predetermined lower limit value at a constant period;
a rotation control circuit configured to output a signal obtained by synthesizing the disturbance signal with an operation amount based on a deviation between the measurement rotation speed output from the rotation monitoring circuit and a target rotation speed that is a rotation speed targeted by the motor; and
a motor driver circuit configured to apply, to the motor, a current or a voltage based on the signal output from the rotation control circuit.

2. The motor rotation control device according to claim 1, wherein
the signal output by the rotation control circuit is a pulse width modulation (PWM) signal, and
the current or the voltage applied to the motor by the motor driver circuit is based on a duty ratio of the PWM signal.

3. The motor rotation control device according to claim 2, wherein
a resolution of a duty ratio on an output side of the motor driver circuit is lower than a resolution of a duty ratio on an input side of the motor driver circuit.

4. The motor rotation control device according to claim 3, wherein
a magnitude between the predetermined upper limit value and the predetermined lower limit value of the disturbance signal is larger than a magnitude of the resolution of the duty ratio on the output side of the motor driver circuit.

5. The motor rotation control device according to claim 2, wherein
a constant period of the disturbance signal is shorter than a period corresponding to a control band of the motor and longer than a period of the PWM signal output by the motor driver circuit.

6. A motor rotation control method comprising:
monitoring a measurement rotation speed which is a measurement result of a rotation speed of a motor;
outputting a disturbance signal that repeats a predetermined upper limit value and a predetermined lower limit value at a constant period;
calculating an operation amount based on a deviation between the measured measurement rotation speed and a target rotation speed that is a rotation speed targeted by the motor, and outputting a signal obtained by synthesizing the disturbance signal with the operation amount; and
applying, to the motor, a current or a voltage based on a signal obtained by synthesizing the output disturbance signal.

7. A distance measurement device for measuring a distance to an object, comprising:
the motor rotation control device according to claim 1.
